# EUROPEAN PATENT SPECIFICATION

(11) **EP 2 876 708 B1**
(45) Date of publication and mention of the grant of the patent: **24.02.2016**
(21) Application number: 14167286.5
(22) Date of filing: 07.05.2014
(51) Int. Cl.: H01M 2/26, H01M 2/34

(54) **Rechargeable battery having fuse**
Wiederaufladbare Batterie mit Sicherung
Batterie rechargeable ayant un fusible

(30) Priority: 20.11.2013 KR 20130141613
(43) Date of publication of application: 27.05.2015
(73) Proprietor: Samsung SDI Co., Ltd., Yongin-si, Gyeonggi-do (KR)
(72) Inventor: Kim, Bo-Hyun, Yongin-si, Gyeonggi-do (KR); LEE, Jong-Ki, Yongin-si, Gyeonggi-do (KR); Kim, Tae-Sik, Yongin-si, Gyeonggi-do (KR); Soh, Hyun, Yongin-si, Gyeonggi-do (KR); Kim, Hyun-Chul, Yongin-si, Gyeonggi-do (KR)
(74) Representative: Ludwig, Ingo

(56) References cited:
- EP-A1- 2 515 363
- EP-A1- 2 575 189
- EP-A1- 2 662 913

## Description

### BACKGROUND

### 1. Field

The invention relates to rechargeable battery comprising a plurality of electrode assemblies, each of which having a first and a second electrode, a terminal and a current collecting member that connects the first electrodes to the terminal, wherein the current collecting member has a terminal connection portion that contacts the terminal and a plurality of electrode connection portions, each of which contacting one of the first electrodes, and wherein the current collecting member comprises at least one fuse portion connecting the terminal connection portion and the electrode connection portions, wherein each of electrode connection portions is respectively connected with the fuse portion.

### 2. Description of the Related Art

A rechargeable battery differs from a primary battery in that it can be repeatedly charged and discharged, while the latter is incapable of being recharged. Rechargeable batteries are disclosed in e.g. EP 2 575 189 A1, EP 2 515 363 A1 and EP 2 662 913 A1.

A low-capacity rechargeable battery is used in small portable electronic devices such as mobile phones, notebook computers, and camcorders, while a high-capacity rechargeable battery is widely used as a power source for driving a motor of a hybrid vehicle and the like.

Recently, a high power rechargeable battery using a non-aqueous electrolyte and having high energy density has been developed, and the high power rechargeable battery is formed by coupling a plurality of rechargeable batteries in series to be used as a power source for driving a motor of a device requiring a large amount of electric power, for example, an electric vehicle and the like.

In addition, a high-capacity battery module normally includes a plurality of rechargeable batteries connected in series, and a rechargeable battery may be formed in a cylindrical or prismatic shape.

When a short circuit occurs due to internal reasons or external alien materials, an overcurrent flows in the rechargeable battery.

When the overcurrent continuously flows, the rechargeable battery may explode or catch fire due to excessive heat generated inside of the rechargeable battery.

### SUMMARY

Hence, the object of the invention is to provide a rechargeable battery that can be operated safely even if a short circuit occurs, wherein the battery has a compact design. This object is achieved according to the invention in that the fuse portion comprises a plurality of longitudinal fuse elements that extend parallel to the electrode connection portions, wherein each of the longitudinal fuse elements contacts one of the electrode connection portions. As the fuse portion contacts and preferably directly contacts the electrode connection portion without any other portion arranged between the fuse portion and the electrode connection portion, the current collecting member has a compact design. In particular, as the fuse portion extends from the electrode connection portion, a length of the current collecting member is reduced, as no additional portion is arranged between the fuse portion and the electrode connection portion, the length extending parallel to the electrode connection portion. Thus, due to the reduced length, a height of the battery can be less than a height of a battery with a known current collecting member. Furthermore, a fuse portion for each of the electrode connection portions is provided such that too high current caused e.g. by a short circuit, can be cut off for each of the electrode connection portions separately. The fuse elements may be provided with a distance therebetween, the distance preferably extending in a depth direction that extends from one of the electrode connection portions to the respective other one and perpendicular to the longitudinal and the width direction. Hence, a gap may be arranged between the fuse portions, which reduces the weight of the current collecting member.

The solutions according to the invention can be combined as desired and further improved by the further following embodiments that are advantageous on their own, in each case, unless where explicitly stated to the contrary.

According to a first advantageous embodiment, the fuse portion can be laterally based on the electrode connection portion, thereby further reducing the total height of the current collecting member. For instance, lateral sides of longitudinal ends of the fuse portion and the electrode connection portions can abut against each other perpendicular to the longitudinal direction, reducing the necessary height of the current collecting member compared to the case that the fuse portion and the electrode connection portion abut against each other in the longitudinal direction.

At least one of the electrode connection portions may comprises a curved section that directly contacts the fuse portion. The curved portion allows forming the current collecting member as desired, such that a width of the current collecting member is reduced by arranging the fuse portion to extend in the longitudinal direction and perpendicular to the width direction. Furthermore, in case the electrode connection portion and the fuse portion or additionally even the terminal connection portion are formed as one part, for instance by punching and bending, the curved portion prevents cornered sections that can not easily be produced.

The fuse portion may comprise a cross fuse element that interconnects at least two of the electrode connection portions. Therefore, too high current between the electrode collection portions and, hence, between battery cells that contact the current collecting member can be shut off.

The longitudinal fuse elements can be arranged between the cross fuse element and the terminal connection portion. Current that seeks to flow from one of the electrode connection portions the another one of the current connection portions is thus conducted directly via the cross fuse element without being conducted by the longitudinal fuse elements. Hence, the longitudinal fuse elements can be adapted to prevent too high currents between the electrode connection portions and the terminal connection portion and the cross fuse element can be adapted to prevent too high currents between the electrode connection portions.

The cross fuse element may interconnect the longitudinal fuse elements at a distance to the electrode connection portions and to the terminal connection portion. For instance, the longitudinal fuse elements may each comprise two sub sections that extend towards each other parallel to the electrode connection portion, wherein the cross fuse element interconnects the longitudinal fuse elements at contact areas of the respective sub sections. The sub sections can be adapted to shut off different too high currents, thereby reducing the generation of arcs in case the current is cut off and increasing design flexibility of the current collecting member with respect to electrical design.

For instance, the cross fuse element is adapted to be melted by a lower amount of current than the longitudinal fuse elements, thereby preventing too high currents between the electrode connection portions, these too high currents being less than too high currents that would be cut off be the longitudinal fuse portions,

In order to be triggered by a lower too high current, a minimum width of the cross fuse element may be less than a minimum width of the longitudinal fuse elements, which can be triggered by a higher too high current.

In particular, the sub sections that contact the electrode connection portions can be adapted to be melted by a lower amount of electrical current than the sub sections that contact the terminal connection portion or vice versa. Hence, the current collecting member can be adapted to cut off too high current at the desired position of the current collecting member.

For example, a minimum width of each of the sub sections that contact the electrode connection portions is less than a minimum width of the sub sections that contact the terminal connection portion or vice versa. Thus, the cut off position of the current collecting member, at which the too high current is cut off, can be easily provided.

The current collecting member may comprise more than two electrode connection portions, each of which contacting an electrode of the same polarity of a plurality of battery cells. The amount of current collecting members preferably corresponds to the amount of electrode connection portions. In particular, the current collecting member may comprise an even amount of electrode connection portions. For instance, at least four longitudinal fuse elements that interconnect the electrode connection portions can be provided. Optionally, the cross fuse element may be provided, wherein a section of the cross fuse element that is melted first due to high electrical current, the section preferably being formed with a minimum width of the cross fuse, is arranged between two middle of the longitudinal fuse sections.

Additional longitudinal fuse elements may be provided that interconnect the cross fuse element and the terminal connection portion, wherein the amount of the longitudinal fuse elements is larger than the amount of the additional longitudinal fuse elements. For instance, the amount of additional longitudinal fuse elements can be half the amount of the longitudinal fuse elements. In case four longitudinal fuse elements are provides, the current collecting member may comprise two additional longitudinal fuse elements. The two additional fuse elements can contact toe cross fuse element at its ends that point in and against the depth direction,

The at least one fuse portion may be made of a material having a lower melting point than a melting point of the terminal connection portion and the electrode connection portions. In particular, selected or all fuse elements may, optionally or additionally to adapting their widths to the electric current that shall trigger the respective fuse element, comprise or even consist of the material with the lower melting point. Reducing the width of a fuse element may reduce its mechanical strength, which may be prevented by using the material with the lower melting point without the reduced width.

The current collecting member may comprise more that one and in particular a plurality of fuse portion connecting the terminal connection portion and the electrode connection portions, wherein each of electrode connection portions may respectively be connected with each of the fuse portions.

The invention is described hereinafter in greater detail and in an exemplary manner using advantageous embodiments and with reference to the drawings. The described embodiments are merely possible configurations, in which, however, the individual features can be provided independently of one another as described above or can be omitted in the drawings.

### BRIEF DESCRIPTION OF THE DRAWINGS

- FIG. 1: is a perspective view of a rechargeable battery according to a first exemplary embodiment of the present invention.
- FIG. 2: is a cross-sectional view of FIG. 1 taken along the line II-II.
- FIG. 3: is an exploded perspective view of electrode assemblies and current collecting members according to the first exemplary embodiment of the present invention.
- FIG. 4: is a side view of a first current collecting member according to the first exemplary embodiment of the present invention.
- FIG. 5: is an exploded perspective view of electrode assemblies and current collecting members according to a second exemplary embodiment of the present invention.
- FIG. 6: is a side view of a first current collecting member according to the second exemplary embodiment of the present invention.
- FIG. 7: is a perspective view of a first current collecting member according to a third exemplary embodiment of the present invention.
- FIG. 8: is a side view of the first current collecting member according to the third exemplary embodiment of the present invention.
- FIG. 9: is a perspective view of a first current collecting member according to a fourth exemplary embodiment of the present invention.
- FIG. 10: is a side view of the first current collecting member according to the fourth exemplary embodiment of the present invention.
- FIG. 11: is a perspective view of a first current collecting member according to a fifth exemplary embodiment of the present invention.

### DETAILED DESCRIPTION

Like reference numerals designate like elements throughout the specification and the drawings.

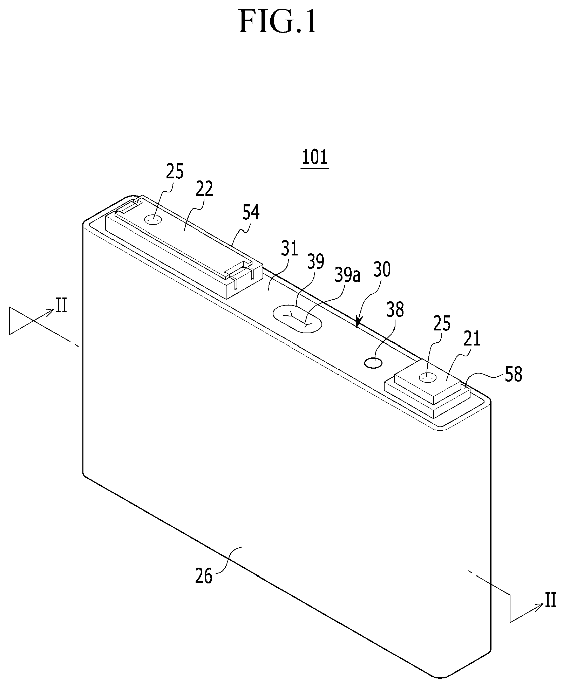

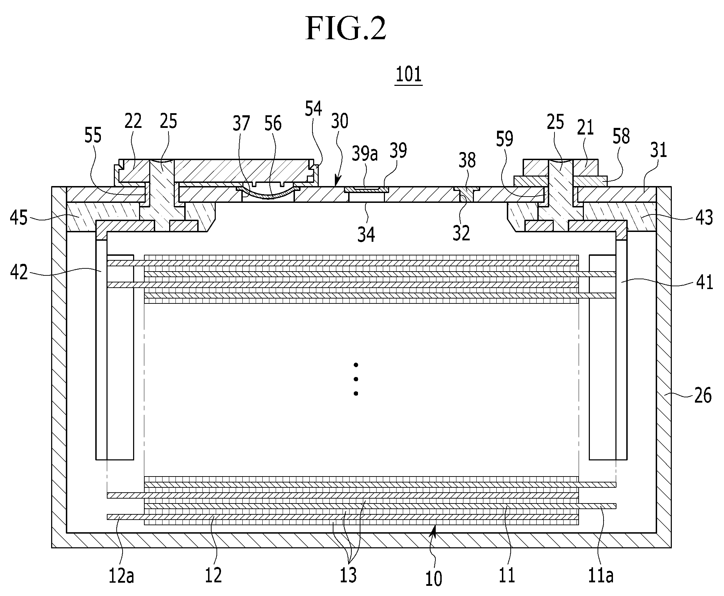

FIG. 1 is a perspective view of a rechargeable battery according to a first exemplary embodiment of the present invention, and FIG. 2 is a cross-sectional view of FIG. 1 taken along the line II-II.

Referring to FIGS. 1 and 2, the rechargeable battery 101 according to an exemplary embodiment of the present invention includes an electrode assembly 10 formed by winding a first, e. g. a positive electrode 11 and a second, e. g. a negative electrode 12 while interposing a separator 13 therebetween, a case 26 in which the electrode assembly 10 is placed, and a cap assembly 30 combined to an opening of the case 26.

The rechargeable battery 101 according to the present exemplary embodiment is exemplarily illustrated as a prismatic lithium ion rechargeable battery.

However, the present invention is not limited thereto, and it can be applied to various types of batteries such as a lithium polymer battery, a cylindrical battery, and the like.

The first electrode 11 and the second electrode 12 include coated regions where an active material is coated on a current collector formed of a thin metal foil, and uncoated regions 11 a and 12a where the active material is not coated thereon.

The first electrode uncoated region 11a is formed at one lateral end of the first electrode 11 along a length direction thereof, and the second electrode uncoated region 12a is formed at the other lateral end of the second electrode 12 along a length direction thereof. In case the electrode assembly 10 is formed by winding, the electrodes 11, 12 are wound around the length direction.

The first electrode 11 and the second electrode 12 are wound while interposing the separator 13, which operates as an insulator, between them.

However, the present invention is not limited thereto, and the electrode assembly 10 may have a layered structure in which a negative electrode and a positive electrode, respectively formed of a plurality of sheets, are layered while interposing a separator or separators between them.

The case 26 is roughly formed in a shape of a cuboid, and an opening is formed at one side thereof. The case 26 may be made of a metal such as aluminum, stainless steel, and the like.

The cap assembly 30 includes a cap plate 31 covering the opening of the case 26, a first terminal 21 protruding out of the cap plate 31 and electrically connected to the first electrode 11, and a second terminal 22 protruding out of the cap plate 31 and electrically connected to the second electrode 12.

The cap plate 31 is formed in an elongated plate shape in one direction, and is combined to the opening of the case 26.

The cap plate 31 includes a sealing cap 38 provided in an electrolyte injection opening 32, and a vent plate 39 which is provided in a vent hole 34 and is formed with a notch 39a set to be opened at a predetermined pressure.

The first and second terminals 21 and 22 are provided to protrude upwards from the cap plate 31, hence away from the electrode assembly 10.

The first terminal 21 is electrically connected to the first electrode 11 via a first current collecting member 41, and the second terminal 22 is electrically connected to the second electrode 12 via a second current collecting member 42.

However, the present invention is not limited thereto, and the first terminal 21 may be electrically connected to the second electrode, while the second terminal 22 may be electrically connected to the first electrode.

The first terminal 21 exemplarily has a rectangular plate shape.

The first terminal 21 is electrically connected to the first electrode 11 via a connecting terminal 25 affixed and e.g. bonded to the first current collecting member 41.

The connecting terminal 25 combined with the first terminal 21 has the same structure as a connecting terminal 25 combined with the second terminal 22.

A sealing gasket 59 for sealing is provided between the connecting terminal 25 and the cap plate 31 to be inserted into a hole in the cap plate 31 that the connecting terminal 25 penetrates, and a lower insulation member 43 is provided under the cap plate 31 to support the current collecting member 41 from above, thus from a side of the current collecting member 41 that faces away from the electrode assembly 10.

A connection member 58 electrically connecting the first terminal 21 and the cap plate 31 is provided under the first terminal 21, i.e. between the cap plate 31 and the first terminal 21.

Accordingly, the cap plate 31 and the case 26 are connected to the first electrode 11.

The second terminal 22 exemplarily has a rectangular plate shape.

The second terminal 22 is electrically connected to the second electrode 12 via the connecting terminal 25' affixed and e.g. bonded to the second current collecting member 42.

The connecting terminal 25' penetrates the cap plate 31 and the second terminal 22 such that its upper part that faces away from the cap plate 31 is fixed to the second terminal 22.

A sealing gasket 55 for sealing is provided between the second terminal 22 and the cap plate 31 and is inserted into a hole through the cap plate 31 that the second terminal 22 penetrates, and a lower insulation member 45 is provided under the cap plate 31, hence between the cap plate 31 and the electrode assembly 10, to insulate the second terminal 22 from the second current collecting member 42 at the cap plate 31.

Meanwhile, a short-circuit protrusion is formed to protrude towards a short-circuit hole 37 at a bottom side of the second terminal 22.

The second terminal 22 is formed to be elongated in one direction to cover the short-circuit hole 37.

An upper insulation member 54 is provided between the second terminal 22 and the cap plate 31 to electrically insulate them from each other.

Since the cap assembly 30 includes a short-circuit member 56, which can short-circuit the positive electrode 11 and the negative electrode 12, the short-circuit member 56 is electrically connected to the cap plate 31 and is deformed by internal pressure of the battery 101 to be connected to the second terminal 22 when the internal pressure of the rechargeable battery 101 is increased above a predetermined level.

The short-circuit hole 37 is formed in the cap plate 31, and the short-circuit member 56 is disposed between the upper insulation member 54 and the cap plate 31 in the short-circuit hole 37.

The short-circuit member 56 includes a curved portion which is convexly curved downwards in an arc shape, and an edge portion which is formed outside of the curved portion and fixed to the cap plate 31.

When gas is generated by an abnormal reaction inside the rechargeable battery 101, the internal pressure of the rechargeable battery 101 increases.

The curved portion is deformed to be convexly curved upwards, i.e. away from the electrode assembly 10, when the internal pressure of the rechargeable battery 101 exceeds the predetermined level, and in this case, the short-circuit protrusion contacts the short-circuit member 56 to cause a short circuit.

In particular the embodiment of the current collecting members as described in the following is advantageous itself and can be applied independent of the above features of the battery 101.

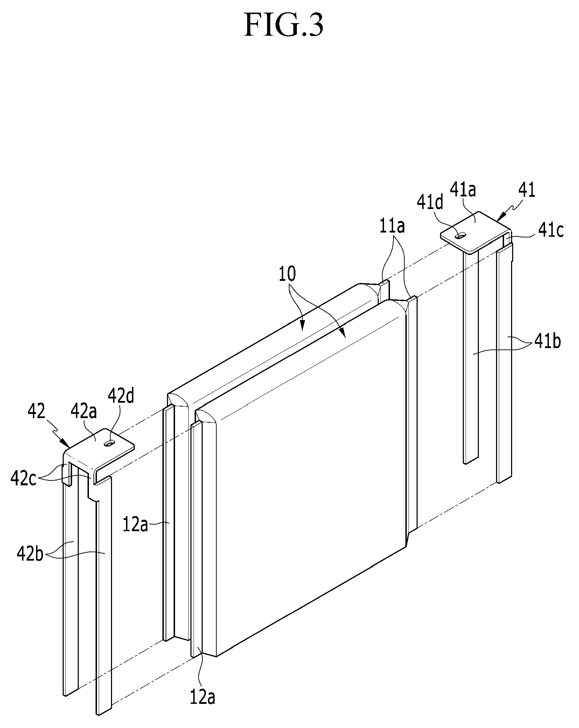

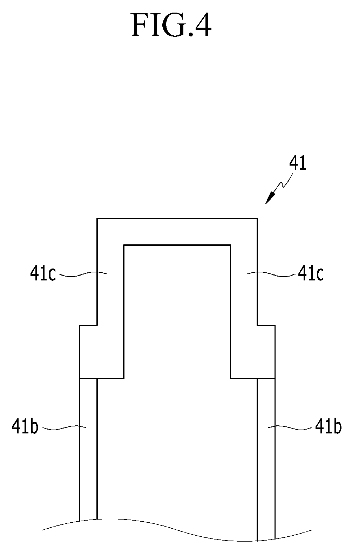

FIG. 3 is an exploded perspective view of electrode assemblies 10 and current collecting members 41, 42 according to the first exemplary embodiment of the present invention, and FIG. 4 is a side view of the first current collecting member 41 according to the first exemplary embodiment of the present invention.

Referring to FIGS. 3 and 4, the first current collecting member 41 includes a terminal connection portion 41a affixed and e.g. bonded to the connecting terminal 25, and electrode connection portions 41b extending from the terminal connection portion 41a towards a bottom of the case 26, hence preferably away from the cap plate 31.

The terminal connection portion 41a may have a quadrangular plate shape, and may be fixed to a bottom side of the connecting terminal 25, e.g. by welding, the bottom side preferably facing the electrode assembly 10.

A fastening hole 41d can be formed in the terminal connection portion 41a, and the terminal connection portion 41a is for instance welded to the connecting terminal 25 while a protrusion formed at the bottom of the connecting terminal 25 is fitted into the fastening hole 41d.

The two electrode assemblies 10 are inserted into the case 26 preferably to be disposed in parallel with each other, and the first current collecting member 41 is provided with the two electrode connection portions 41 b.

Between the terminal connection portion 41a and the two electrode connection portions 41b, a first fuse portion is arranged that interconnects the terminal connection portion 41a and the two electrode connection portions 41 b. Preferably, the fuse portion directly contacts the electrode connection portion 41 b and optionally also the terminal connection portion 41a.

The electrode connection portions 41b may be bent from the first fuse portion to be affixed and e.g. bonded to the first electrode uncoated region 11a while being disposed in parallel with the respective first electrode uncoated region 11a.

The electrode connection portions 41b are respectively fixed and e.g. bonded to the electrode uncoated regions 11 a of the first electrodes 11 of different electrode assemblies 10, for instance by welding.

The fuse portion comprises two longitudinal fuse elements 41 c that may be bar-shaped and provided at a distance to each other. The longitudinal fuse elements 41c preferably extend parallel to the electrode connection portions 41b and/or to each other. They are formed between the electrode connection portions 41b and the terminal connection portion 41a such that they are melted faster than their peripheral regions of the current collecting member 41 when an overcurrent flows through the first current collecting member 41.

The longitudinal fuse elements 41c extend from the terminal connection portion 41a to protrude towards the bottom of the case 26, hence, preferably away from the cap plate 31.

The two longitudinal fuse elements 41c may be formed adjacent to the terminal connection portion 41a.The longitudinal fuse elements 41c have smaller cross-sections than their adjoining regions of the current collecting member 41.

The electrode connection portions 41b are connected to the terminal connection portion 41a via the longitudinal fuse elements 41c, and each of the longitudinal fuse elements 41c is connected to and preferably directly contacts one of the electrode connection portions 41 b.

The longitudinal fuse elements 41c are disposed in series with the electrode connection portions 41b.

The second current collecting member 42 includes a terminal connection portion 42a affixed and e.g. bonded to the connecting terminal 25', and electrode connection portions 42b extending from the terminal connection portion 42a towards the bottom of the case 26, hence, away from the cap plate 31.

A fastening hole 42d may be formed in the terminal connection portion 42a, and the terminal connection portion may be affixed and e.g. bonded to the connecting terminal 25' by for instance welding while a protrusion that is optionally formed at a bottom of the connecting terminal 25 is fitted into the fastening hole 42d.

Between the terminal connection portion 42a and the two electrode connection portions 42b, a first fuse portion is arranged that interconnects the terminal connection portion 42a and the two electrode connection portions 42b. Preferably, the fuse portion directly contacts the electrode connection portions 42b and optionally also the terminal connection portion 42a.

The electrode connection portions 42b extend and may be bent from the longitudinal fuse elements 42c to be affixed and e.g. bonded to one of the electrode uncoated regions 12a for instance of the second electrodes 12 by e.g. welding while being disposed in parallel with the longitudinal fuse elements 42c.

The electrode connection portions 42b are respectively affixed and e.g. bonded to the electrode uncoated regions 12a of the second electrode 12 of the different electrode assemblies 10 by for instance welding.

The longitudinal fuse elements 42c are formed between the electrode connection portions 42b and the terminal connection portion 42a such that they are melted faster than their adjoining regions of the second current collecting member 42 when an overcurrent flows through the second current collecting member 42.

The longitudinal fuse elements 42c are formed to have a smaller cross-section than their adjoining regions of the second current collecting member 42, and the electrode connection portions 42b are connected to the terminal connection portion 42a via the longitudinal fuse elements 42c.

When an internal short-circuit occurs in one of the electrode assemblies 10, short-circuit current flows from the other electrode assembly 10 to the short-circuited electrode assembly 10.

The short-circuit current flows through the electrode connection portions 41 b and 42b and the longitudinal fuse elements 41c and 42c, and the longitudinal fuse elements 41c and 42c are melted when the short-circuit current flows, thereby cutting off the short-circuit current.

In addition, in case an external short-circuit occurs, e.g. due to the deformed short-circuit member 56, a short-circuit current flows from each of the electrode assemblies 10 to the corresponding terminal, and the short-circuit current flows to the corresponding terminal through the longitudinal fuse elements 41c and 42c.

Accordingly, the longitudinal fuse elements 41c and 42c may cut off the short-circuit current by being melted when the short-circuit current flows.

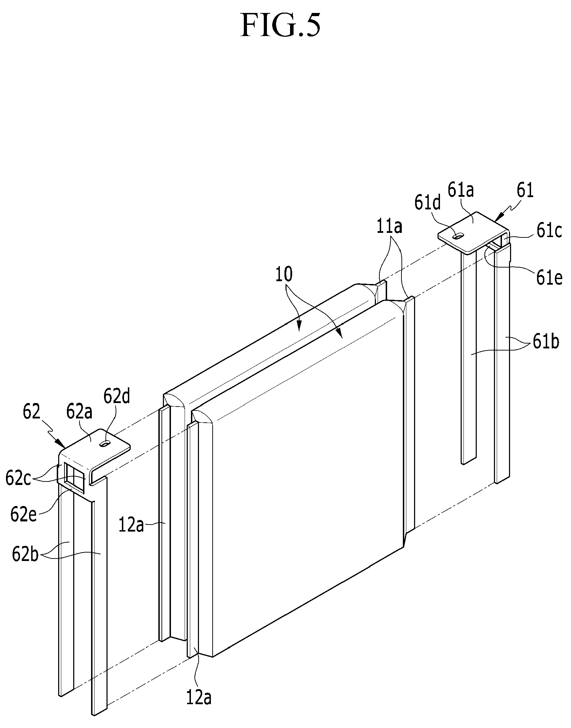

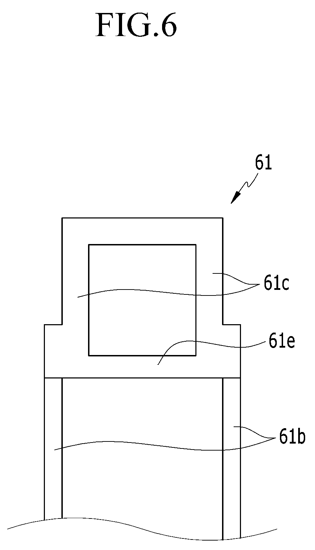

FIG. 5 is an exploded perspective view of electrode assemblies and current collecting members according to a second exemplary embodiment of the present invention, and FIG. 6 is a side view of a first current collecting member according to the second exemplary embodiment of the present invention.

Referring to FIGS. 5 and 6, since a rechargeable battery according to the present exemplary embodiment may have the same structure as the first exemplary embodiment described above except for a structure of first and second current collecting members 61 and 62, a repeated description of the same structure will be omitted.

The first current collecting member 61 includes a terminal connection portion 61a affixed and e.g. bonded to the connecting terminal 25, and electrode connection portions 61b extending away from the terminal connection portion 61a and towards the bottom of the case 26, thus, away from the cap plate 31.

The terminal connection portion 61a can have a quadrangular plate shape, and may be fixed to the bottom of the connecting terminal 25 by e.g. welding, the bottom facing the electrode assembly 10.

A fastening hole 61d is preferably formed in the terminal connection portion 61a, and the terminal connection portion 61a is preferably welded to the connecting terminal 25 while a protrusion formed at the bottom of the connecting terminal 25 is fitted into the fastening hole 61d.

The two electrode assemblies 10 are preferably disposed in parallel with each other in the case 26, and the first current collecting member 61 is provided with the two electrode connection portions 61 b.

Between the terminal connection portion 61a and the two electrode connection portions 61b, a first fuse portion is arranged that interconnects the terminal connection portion 61a and the two electrode connection portions 61 b. Preferably, the fuse portion directly contacts the electrode connection portions 61b and optionally also the terminal connection portion 61a.

The electrode connection portions 61b extend and may be bent from the first fuse portion and are affixed and e.g. bonded to the electrode uncoated region 11a of the first electrode 11 while being disposed in parallel therewith.

The electrode connection portions 61b are respectively affixed and e.g. bonded to the electrode uncoated regions 11a of first electrodes 11 of the different electrode assemblies 10 by for instance welding.

The longitudinal fuse elements 61c are formed between the electrode connection portions 61b and the terminal connection portion 61a such that they are melted faster than their neighboring regions of the current collecting member 61 when an overcurrent flows.

The longitudinal fuse elements 61c extend and may each be bent from the terminal connection portions 61a to protrude towards the bottom of the case 26, hence, away from the cap plate 31. The two longitudinal fuse elements 61c are preferably formed adjacent to the terminal connection portion 61a, and the longitudinal fuse elements 61c have smaller cross-sections than their neighboring regions of the current collecting member 61.

The electrode connection portions 61b are connected to the terminal connection portion 61a via the longitudinal fuse elements 61c, and each of the longitudinal fuse elements 61c is connected to and may even contact one of the electrode connection portions 61 b.

The longitudinal fuse elements 61c can be disposed in series with the electrode connection portions 61 b.

Furthermore, a cross fuse element 61e may be formed between the electrode connection portions 61b to directly connect the electrode connection portions 61b with each other. The cross fuse element 61 e may have a bar shape and preferably extends essentially perpendicular to the electrode connection portions 61b.

The cross fuse element 61e is connected to respective lateral ends of the electrode connection portions 61b or of the longitudinal fuse elements 61c such that it is disposed to cross the electrode connection portions 61 b.

Opposite ends of the longitudinal fuse element 61e are respectively connected to the electrode connection portions 61b. Hence, the opposite ends of the cross fuse element 61e may directly contact the electrode connection portions 61b and/or the longitudinal fuse elements 61c.

The cross fuse element 61e preferably has a smaller cross-section than its cross regions such that it is melted faster than its neighboring regions when an overcurrent flows.

The cross fuse element 61e is preferably arranged between the electrode connection portions 61b and longitudinal fuse elements 61c and may hence be disposed closer to the electrode connection portions 61b than the longitudinal fuse elements. The electrode connection portions 61b may be connected with each other through the cross fuse element 61 e.

A second current collecting member 62 can be provided that includes a terminal connection portion 62a affixed and e.g. bonded to the connecting terminal 25', and electrode connection portions 62b extending away from the terminal connection portion 62a towards the bottom of the case 26, the bottom of the case 26 being opposite of the cap plate 31.

A fastening hole 62d can be formed in the terminal connection portion 62a, and the terminal connection portion 62a is preferably welded to the connecting terminal 25' while a protrusion formed at the bottom of the connecting terminal 25' is fitted into the fastening hole 62d.

Between the terminal connection portion 62a and the two electrode connection portions 62b, a first fuse portion is arranged that interconnects the terminal connection portion 62a and the two electrode connection portions 62b. Preferably the fuse portion directly contacts the electrode connection portions 62b and optionally also the terminal connection portion 62a.

The electrode connection portions 62b extend and may be bent from the longitudinal fuse elements 62c to be affixed and e.g. bonded to the electrode uncoated region 12a of the second electrode 12 while preferably being disposed in parallel therewith.

The electrode connection portions 62b are respectively affixed and e.g. bonded to the electrode uncoated regions 12a of the second electrodes 12 of the different electrode assemblies 10 by for instance welding.

The longitudinal fuse elements 62c are formed between the electrode connection portions 62b and the terminal connection portion 62a such that they are melted faster than the adjacent regions of the second current collecting member 62 when an overcurrent flows.

The longitudinal fuse elements 62c are formed to have a smaller cross-section than their adjacent regions, and the electrode connection portions 62b are connected to the terminal connection portion 62a through the longitudinal fuse elements 62c.

A cross fuse element 62e is formed between the electrode connection portions 62b to directly connect the electrode connection portions 62b with each other.

The cross fuse element 62e is connected to respective lateral ends of the electrode connection portions 62b or of the longitudinal fuse elements 62c such that it is disposed to cross the electrode connection portions 62b.

The cross fuse element 62e may have a smaller cross-section than its neighboring region and for instance than the longitudinal fuse elements 62c such that it is melted faster than its neighboring region and for instance the longitudinal fuse elements 62c when an overcurrent flows through the second current collecting member 62.

The cross fuse element 62e is preferably arranged between the electrode connection portions 62b and the longitudinal fuse elements 62c and may hence be disposed closer to the electrode connection portions 62b than the longitudinal fuse elements 62c.

When an internal short-circuit occurs in one of the electrode assemblies 10, a short-circuit current flows from the other electrode assembly 10 to the short-circuited electrode assembly 10. The short-circuit current flows from the electrode connection portions 61b and 62b to the cross fuse element 61e and 62e, and the cross fuse element 61e and 62c are melted when the short-circuit current flows.

After the cross fuse element 61e and 62e are melted, the short-circuit current flows from the electrode connection portions 61b and 62b to the longitudinal fuse elements 61c and 62c, and in this case, the first fuse elements 61c and 62c are melted.

Accordingly, in case the cross fuse elements 61e and 62e are formed, the fuse elements 61e, 61c and 62e and 62c are melted in sequence to reduce arc generation when the short-circuit occurs.

In addition, structural stability of the current collecting member 61, 62 is improved as the cross fuse elements 61 e and 62e support the longitudinal fuse elements 61c and 62c.

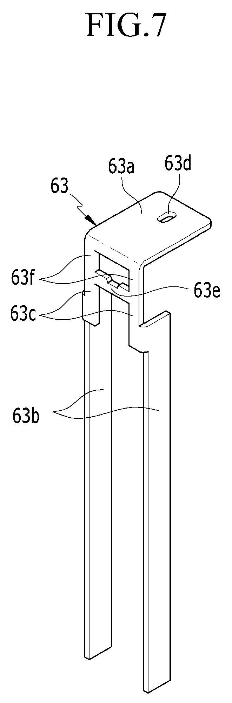

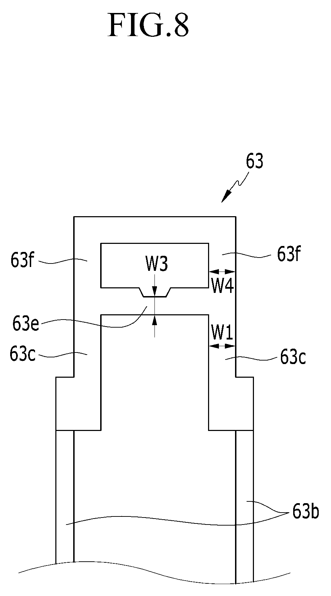

FIG. 7 is a perspective view of a first current collecting member according to a third exemplary embodiment of the present invention, and FIG. 8 is a side view of the first current collecting member according to the third exemplary embodiment of the present invention.

Referring to FIGS. 7 and 8, since a rechargeable battery according to the present exemplary embodiment has the same structure as the first exemplary embodiment described above except for a structure of a first current collecting member 63, a repeated description of the same structure will be omitted.

The first current collecting member 63 includes a terminal connection portion 63a affixed and e.g. bonded to the connecting terminal 25, and electrode connection portions 63b extending away from the terminal connection portion 63a towards the bottom of the case 26, the bottom being opposite the cap plate 31.

The terminal connection portion 63a preferably has a quadrangular plate shape, and is fixed to the bottom of the connecting terminal 25 by for instance welding, the bottom of the connecting terminal 25 facing the bottom of the case 26.

A fastening hole 63d may be formed in the terminal connection portion 63a, and the terminal connection portion 63a can be welded to the connecting terminal 25 while the protrusion formed at the bottom of the connecting terminal 25 is fitted into the fastening hole 63d.

The two electrode assemblies 10 are preferably disposed in parallel with each other in the case 26, and the first current collecting member 63 is provided with the two electrode connection portions 63b.

Between the terminal connection portion 63a and the two electrode connection portions 63b, a first fuse portion is arranged that interconnects the terminal connection portion 63a and the two electrode connection portions 63b. Preferably, the fuse portion directly contacts the electrode connection portions 63b and optionally also the terminal connection portion 63a.

The electrode connection portions 63b extend and may be bent from the longitudinal fuse elements 63c to be affixed and e.g. bonded to the electrode uncoated region 11a of the first electrodes 11 while being disposed in parallel therewith.

The electrode connection portions 63b are respectively affixed and e.g. bonded to the electrode uncoated regions 11a of the different electrode assemblies 10 by for instance welding.

The longitudinal fuse elements 63c are formed between the electrode connection portions 63b and the terminal connection portion 63a such that they are melted faster than their adjacent regions of the first current collecting member 63 when an overcurrent flows.

The longitudinal fuse elements 63c extend and may be bent from the terminal connection portion 63a to protrude towards the bottom of the case 26, thus away from the cap plate 31.

The two longitudinal fuse elements 63c are formed bordering the terminal connection portion 63a, and the longitudinal fuse elements 63c have smaller cross-sections than the adjacent regions of the first current collecting member 63.

The electrode connection portions 63b are connected to the terminal connection portion 63a via the longitudinal fuse elements 63c, and each of the longitudinal fuse elements 63c is connected to and preferably directly contacts one of the electrode connection portions 63b.

The longitudinal fuse elements 63c are disposed in series with the electrode connection portions 63b.

A cross fuse element 63e is formed to interconnect the longitudinal fuse elements 63c.The cross fuse element 63e preferably extends in a crossing direction of the longitudinal fuse elements 63c.

The cross fuse element 63e contacts lateral ends of the longitudinal fuse elements 63c such that it electrically interconnects the longitudinal fuse elements 63c.

The cross fuse element 63e is disposed between the longitudinal fuse elements 63c and at a distance to the terminal connection at a distance portion 63a and the electrode connection portions 63b.The longitudinal fuse elements 63c may hence be disposed closer to the electrode connection portions 63b than the cross fuse element 63e and may even contact the electrode connection portion 63b.

Sub sections 63f of the longitudinal fuse elements 63c are formed between the cross fuse element 63e and the terminal connection portion 63a such that they are disposed in series to be connected with other sub sections of the longitudinal fuse elements 63c that are formed between the cross fuse element 63e and the electrode connection portions 63b.

The sub sections 63f are connected to the terminal connection portion 63a through the other sub sections, and each of the other sub sections is connected to each of the sub sections 63f. The sub sections 63f are disposed above the other sub sections, thus closer to the terminal connection portion 63a than the other sub sections or the cross fuse element 63e, and the cross fuse element 63e is disposed between the sub sections 63f and the other sub sections.

In addition, the other sub sections are disposed closer to the electrode connection portions 63b than the sub section 63f.

A width W4 of the sub sections 63f may be smaller than a width W1 of the other sub sections.

In addition, a width W3 of the cross fuse element 63e may be smaller than the width W1 of the other sub sections.

Accordingly, the cross fuse elements 63e and the sub section 63f are melted faster than the other sub section by a too high electrical current.

When an internal short-circuit occurs in one of the electrode assemblies 10, a short-circuit current flows from the other electrode assembly 10 to the short-circuited electrode assembly 10. The short-circuit current flows through the other sub sections of the longitudinal fuse elements 63c in the electrode connection portions 63b, and the other sub sections of the longitudinal fuse elements 63c are melted when the short-circuit current flows.

However, when at least one of the other sub sections is not completely melted, the current flows through the cross fuse element 63e, and in this case, the cross fuse element 63e is melted. Moreover, the short-circuit current may flow through the sub sections 63f after the cross fuse element 63e is melted. The sub sections 63f may be melted as a result.

When an external short-circuit occurs, the current can flow through the sub section 63f and the other sub section, and the sub sections 63f are melted due to the short-circuit current.

Thus, the short-circuit current may be stably cut off.

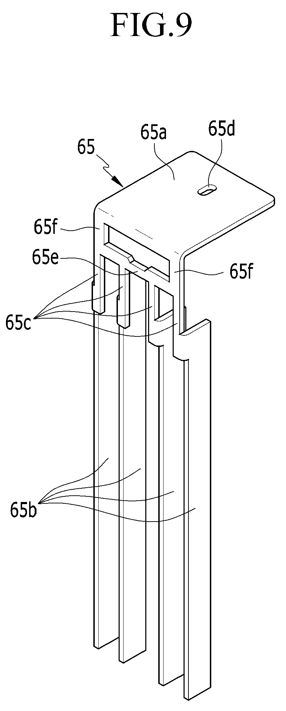

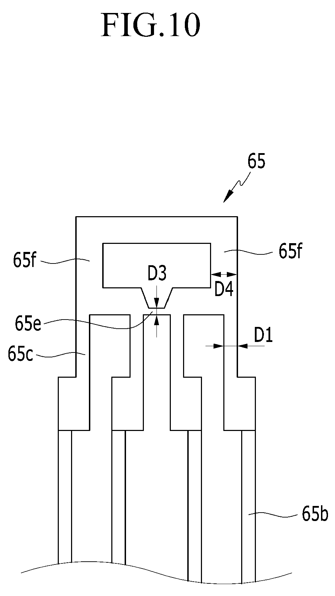

FIG. 9 is a perspective view of a first current collecting member according to a fourth exemplary embodiment of the present invention, and FIG. 10 is a side view of the first current collecting member according to the fourth exemplary embodiment of the present invention.

Referring to FIGS. 9 and 10, since a rechargeable battery according to the present exemplary embodiment has the same structure as the first exemplary embodiment described above, except for a structure of a first current collecting member 65 and a number of electrode assemblies placed in the case, a repeated description of the same structure will be omitted.

Since a second current collecting member may have the same structure as a first current collecting member 65, a description of the second current collecting member will be replaced with the description of the first current collecting member 65.

Four electrode assemblies 10 are placed in the case 26, and the electrode assemblies 10 are preferably disposed in parallel such that their flat frontal sides are erected to face each other.

The first current collecting member 65 includes a terminal connection portion 65a affixed and e.g. bonded to the connecting terminal 25, and four electrode connection portions 65b extending away from the terminal connection portion 65a towards the bottom of the case 26, the electrode assemblies 10 being placed between the bottom of the case 26 and the cap plate 31.

The terminal connection portion 65a may have a quadrangular plate shape, and is fixed to the bottom side of the connecting terminal 25 by for instance welding.

A fastening hole 65d may be formed in the terminal connection portion 65a, and the terminal connection portion 65a can be welded to the connecting terminal 25 while the protrusion formed at the bottom of the connecting terminal 25 is fitted into the fastening hole 65d.

The first current collecting member 65 has four electrode connection portions 65b, and each of the four electrode connection portions 65b are connected to and preferably contact one of the respective different electrode assemblies 10.

The electrode connection portions 65b extend and may be bent from a fuse portion to be affixed and e.g. bonded to the electrode uncoated region 11a of the first electrodes 11 while being disposed in parallel therewith.

The electrode connection portions 65b are respectively bonded to the electrode uncoated regions 11a of the first electrodes 11 of the different electrode assemblies 10 by for instance welding.

Between the terminal connection portion 65a and the two electrode connection portions 65b, a first fuse portion is arranged that interconnects the terminal connection portion 65 and the two electrode connection portions 65b. Preferably, the first fuse portion directly contacts the two electrode connection portions 65b and optionally also the terminal connection portion 65a

The fuse portion comprises four longitudinal fuse elements 65c that are formed between the electrode connection portions 65b and the terminal connection portion 61a such that they are melted faster than their close-by regions of the current collecting member 65 when an overcurrent flows.

The longitudinal fuse elements 65c extend and may be bent from the terminal connection portion 65a to protrude towards the bottom of the case 26, hence away from the cap plate 31.

The longitudinal fuse elements 65c may have smaller cross-sections than the close-by regions of the current collection member 65.

The electrode connection portions 65b are connected to the terminal connection portion 65a via the longitudinal fuse elements 65c, and each of the longitudinal fuse elements 65c is connected to and preferably directly contacts each of the electrode connection portions 65b.

The longitudinal fuse elements 65c are each disposed in series with one of the electrode connection portions 65b.

A cross fuse element 65e is formed to electrically connect the longitudinal fuse elements 65c with each other. The cross fuse element 65e can extend in a crossing direction of the longitudinal fuse elements 65c.

The cross fuse element 65e is connected to longitudinal ends of all of the first fuse portions 65c such that it electrically connects the longitudinal fuse elements 65c to each other.

The cross fuse element 65e is disposed above the longitudinal fuse elements 65c, hence, closer to the terminal connection portion 65a than the longitudinal fuse elements 65c, and the longitudinal fuse elements 65c are disposed closer to the electrode connection portions 65b than the cross fuse element 65e.

Two additional longitudinal fuse elements 65f may be provided, which are disposed between the longitudinal fuse elements 65c and the terminal connection portion 65a.

Accordingly, the first current collecting member 65 has more longitudinal fuse elements 65c than it has additional longitudinal fuse elements 65f.

The additional longitudinal fuse elements 65f are disposed above the longitudinal fuse elements 65c, hence, closer to the terminal connecting portion 65a than the cross fuse elements 65e, and the cross fuse element 65e is disposed between the longitudinal fuse elements 65c and the additional longitudinal fuse elements 65f.

In addition, the longitudinal fuse elements 65c are disposed closer to the electrode connection portions 65b than the additional longitudinal fuse elements 65f.

A width D4 of the additional longitudinal fuse elements 65f is preferably larger than the width D1 of the longitudinal fuse element 65c. In particular, the width D4 of the additional longitudinal fuse element 65f is preferably at least twice the width D1 of the longitudinal fuse elements 65c.

The minimum width D3 of the cross fuse element 65e is smaller than the width D1 of the longitudinal fuse element 65c.

Accordingly, the cross fuse element 65e can be melted faster than the longitudinal fuse element 65c when an overcurrent flows.

When an internal short-circuit occurs in one of the electrode assemblies 10, the short-circuit current flows from the other electrode assembly 10 to the electrode assembly 10 short-circuited.

The short-circuit current flows through the longitudinal fuse element 65c in the electrode connection portions 65b, and the longitudinal fuse element 65c are melted when the short-circuit current flows.

However, when the longitudinal fuse elements 65c are not completely melted, the current flows through the cross fuse element 65e, and in this case, the cross fuse element 65e is melted.

Moreover, the short-circuit current flows through the additional longitudinal fuse element 63f after the cross fuse element 65e is melted, and the additional longitudinal fuse elements 65f are melted as a result.

The additional longitudinal fuse elements 65f are each connected to two of the longitudinal fuse elements 65c in case the cross fuse element 65e is melted between two middle or inner of the longitudinal fuse element 65c, and two times larger current flows through the additional longitudinal fuse element 65f than through each of the two longitudinal fuse elements 65c.

Thus, the additional longitudinal fuse elements 65f may be easily melted by complementing the longitudinal fuse elements 65c, even if the additional fuse elements 65f are formed with a greater width than the longitudinal fuse elements 65c.

The first current collecting member 65 may in particular comprise a plurality of electrode connecting portions 65b, e.g. three, four, five, six, seven or even more, wherein the first current collecting member 65 may comprise longitudinal fuse elements 65c in the same amount as electrode connecting portions 65b. The amount of the additional longitudinal fuse element 65f may be half of the amount of the longitudinal fuse element 65c adjusted upward. In particular, the first current collecting member 65 may comprise an even amount of longitudinal fuse elements 65b. A section with the minimum width D3 of the cross fuse element 65e is preferably arranged between two and e.g. between two inner or middle of the longitudinal fuse elements 65b.

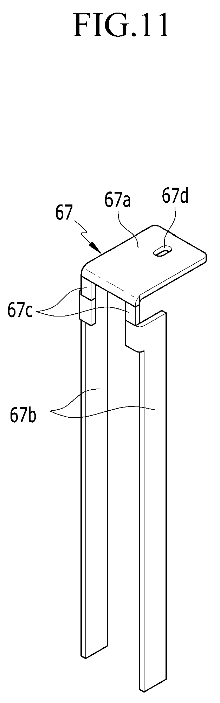

FIG. 11 is a perspective view of a first current collecting member according to a fifth exemplary embodiment of the present invention.

Referring to FIG. 11, since a rechargeable battery according to the present exemplary embodiment has the same structure as the first exemplary embodiment described above except for a structure of a first current collecting member, a repeated description of the same structure will be omitted.

A first current collecting member 67 includes a terminal connection portion 67a affixed and e.g. bonded to the connecting terminal 25, and electrode connection portions 67b extending away from the terminal connection portion 67a towards the bottom of the case 26, the bottom being a side of the case 26 opposite the cap plate 31.

The terminal connection portion 67a may have a quadrangular plate shape, and can be fixed to the bottom of the connecting terminal 25 by for instance welding.

A fastening hole 67d may be formed in the terminal connection portion 67a, and the terminal connection portion 67a can be welded to the connecting terminal 25 while the protrusion formed at the bottom of the connecting termial 25 is fitted into the fastening hole 67d.

The two electrode assemblies 10 are preferably disposed in parallel with each other in the case 26, and the first current collecting member 67 is provided with the two electrode connection portions 67b.

Between the terminal connection portion 67a and the two electrode connection portions 67b, a first fuse portion is arranged that interconnects the terminal connection portion 67a and the two electrode connection portions 67b. Preferably, the first fuse portion directly contacts the two electrode connection portions 67b and optionally also the terminal connection portion 67a.

The electrode connection portions 67b extend and may be bent from the fuse portion to be affixed and e.g. bonded to the electrode uncoated region 11a while being disposed in parallel therewith.

The electrode connection portions 67b are respectively affixed and e.g. bonded to the electrode uncoated regions 11a of the different electrode assemblies 10 by for instance welding.

The fuse portion may comprise or even consist of two longitudinal fuse elements 67c that are formed between the electrode connection portions 67b and the terminal connection portion 67a such that they are melted faster than the peripheral regions of the current collecting member 67 when an overcurrent flows.

The longitudinal fuse elements 67c extend and may be bent from the terminal connection portion 67a to protrude towards the bottom of the case 26, i.e. away from the cap plate 31.

The two longitudinal fuse elements 67c are made of a material having a lower melting point than the peripheral regions of the current collecting member 67.

## Claims

1. A rechargeable battery (101) comprising a plurality of electrode assemblies (10), each of which having a first and a second electrode (11,12), a terminal (21) and a current collecting member (41) that connects the first electrodes (11) to the terminal (21), wherein the current collecting member (41) has a terminal connection portion (41a) that contacts the terminal (21) and a plurality of electrode connection portions (41 b), each of which contacting one of the first electrodes (11), and wherein the current collecting member (41) comprises at least one fuse portion connecting the terminal connection portion (41a) and the electrode connection portions (41b), wherein each of electrode connection portions (41b) is respectively connected with the fuse portion, **characterized in that** the fuse portion comprises a plurality of longitudinal fuse elements (41c) that extend parallel to the electrode connection portions (41b), wherein each of the longitudinal fuse elements (41c) contacts one of the electrode connection portions (41b).

2. The battery of claim 1, **characterized in that** the fuse portion is laterally based on the electrode connection portion (41 b).

3. The battery of claim 1 or 2, **characterized in that** at least one of the electrode connection portions (41b) comprises a curved section that directly contacts the fuse portion.

4. The battery of any of claims 1 to 3, **characterized in that** the fuse portion comprises a cross fuse element (62e) that interconnects at least two of the electrode connection portions (62b).

5. The battery of claim 4, **characterized in that** the longitudinal fuse elements (62c) are arranged between the cross fuse element (62e) and the terminal connection portion (62a).

6. The battery of claim 4, **characterized in that** the cross fuse element (63e) interconnects the longitudinal fuse elements (63c) at a distance to the electrode connection portions (63b) and to the terminal connection portion (63a).

7. The battery of claim 6, **characterized in that** the longitudinal fuse elements each comprise two sub sections (63f) that extend towards each other parallel to the electrode connection portion (63b), wherein the cross fuse element (63e) interconnects the longitudinal fuse elements at contact areas of the respective sub sections (63f).

8. The battery of any of claims 4 to 7, **characterized in that** the cross fuse element (62e) is adapted to be melted by a lower amount of current than the longitudinal fuse elements (62c).

9. The battery of claim 8, **characterized in that** a minimum width (W3) of the cross fuse element (63e) is less than a minimum width (W1) of the longitudinal fuse elements (63c).

10. The battery of any of claims 7 to 9, **characterized in that** the sub sections that contact the electrode connection portions (63b) are adapted to be melted by a lower amount of electrical current than the sub sections (63f) that contact the terminal connection portion (63a).

11. The battery of any of claims 7 to 10, **characterized in that** a minimum width (W1) of each of the sub sections (63c) that contact the electrode connection portions (63b) is less than a minimum width (W4) of the sub sections (63f) that contact the terminal connection portion (63a).

12. The battery of any of claims 1 to 4, **characterized in that** at least four longitudinal fuse elements (65c) that interconnect the electrode connection portions (65b) and the cross fuse element (65e) are provided, wherein a section of the cross fuse element (65e) that is formed with a minimum width (W3) is arranged between two middle of the longitudinal fuse sections (65c).

13. The battery of claim 12, **characterized in that** additional longitudinal fuse elements (65f) are provided that interconnect the cross fuse element (65e) and the terminal connection portion (65a), wherein the amount of the longitudinal fuse elements (65c) is larger that the amount of the additional longitudinal fuse elements.

14. The battery of any of claims 1 to 13, **characterized in that** the at least one fuse portion is made of a material having a lower melting point than a melting point of the terminal connection portion and the electrode connection portions.

## Patentansprüche

1. Wiederaufladbare Batterie (101), aufweisend eine Vielzahl von Elektrodenanordnungen (10), von denen jede eine erste und eine zweite Elektrode (11, 12), einen Anschluss (21) und ein Stromsammelelement (41), das die ersten Elektroden (11) mit dem Anschluss (21) verbindet, aufweist, wobei das Stromsammelelement (41) einen Anschlussverbindungsabschnitt (41a), der mit dem Anschluss (21) in Kontakt steht, und eine Vielzahl von Elektrodenverbindungsabschnitten (41b), von denen jeder mit einer der ersten Elektroden (11) in Kontakt steht, aufweist, und wobei das Stromsammelelement (41) zumindest einen Sicherungsabschnitt, der den Anschlussverbindungsabschnitt (41a) und die Elektrodenverbindungsabschnitte (41b) verbindet, aufweist, wobei jeder der Elektrodenverbindungsabschnitte (41b) jeweils mit dem Sicherungsabschnitt verbunden ist, **dadurch gekennzeichnet, dass** der Sicherungsabschnitt eine Vielzahl sich in Längsrichtung erstreckender Sicherungselemente (41c), die sich parallel zu den Elektrodenverbindungsabschnitten (41b) erstrecken, aufweist, wobei jedes der sich in Längsrichtung erstreckenden Sicherungselemente (41c) mit einem der Elektrodenverbindungsabschnitte (41b) in Kontakt steht.

2. Batterie nach Anspruch 1, **dadurch gekennzeichnet, dass** der Sicherungsabschnitt seitlich auf dem Elektrodenverbindungsabschnitt (41b) abgestützt ist.

3. Batterie nach Anspruch 1 oder 2, **dadurch gekennzeichnet, dass** zumindest einer der Elektrodenverbindungsabschnitte (41b) einen gekrümmten Abschnitt, der mit dem Sicherungsabschnitt direkt in Kontakt steht, aufweist.

4. Batterie nach einem der Ansprüche 1 bis 3, **dadurch gekennzeichnet, dass** der Sicherungsabschnitt ein sich quer erstreckendes Sicherungselement (62e), das zumindest zwei der Elektrodenverbindungsabschnitte (62b) miteinander verbindet, aufweist.

5. Batterie nach Anspruch 4, **dadurch gekennzeichnet, dass** die sich in Längsrichtung erstreckenden Sicherungselemente (62c) zwischen dem sich quer erstreckenden Sicherungselement (62e) und dem Anschlussverbindungsabschnitt (62a) angeordnet sind.

6. Batterie nach Anspruch 4, **dadurch gekennzeichnet, dass** das sich quer erstreckende Sicherungselement (63e) die sich in Längsrichtung erstreckenden Sicherungselemente (63c) in einem Abstand zu den Elektrodenverbindungsabschnitten (63b) und zum Anschlussverbindungsabschnitt (63a) miteinander verbindet.

7. Batterie nach Anspruch 6, **dadurch gekennzeichnet, dass** die sich in Längsrichtung erstreckenden Sicherungselemente jeweils zwei Teilabschnitte (63f), die sich parallel zum Elektrodenverbindungsabschnitt (63b) zueinander erstrecken, aufweisen, wobei das sich quer erstreckende Sicherungselement (63e) die sich in Längsrichtung erstreckenden Sicherungselemente in Kontaktbereichen der jeweiligen Teilabschnitte (63f) miteinander verbindet.

8. Batterie nach einem der Ansprüche 4 bis 7, **dadurch gekennzeichnet, dass** das sich quer erstreckende Sicherungselement (62e) angepasst ist, um durch eine geringere Strommenge als die sich in Längsrichtung erstreckenden Sicherungselemente (62c) geschmolzen zu werden.

9. Batterie nach Anspruch 8, **dadurch gekennzeichnet, dass** eine kleinste Breite (W3) des sich quer erstreckenden Sicherungselements (63e) kleiner ist als eine kleinste Breite (W1) der sich in Längsrichtung erstreckenden Sicherungselemente (63c).

10. Batterie nach einem der Ansprüche 7 bis 9, **dadurch gekennzeichnet, dass** die Teilabschnitte, die mit den Elektrodenverbindungsabschnitten (63b) in Kontakt stehen, angepasst sind, um durch eine geringere Menge elektrischen Stroms als die Teilabschnitte (63f), die mit dem Anschlussverbindungsabschnitt (63a) in Kontakt stehen, geschmolzen zu werden.

11. Batterie nach einem der Ansprüche 7 bis 10, **dadurch gekennzeichnet, dass** eine kleinste Breite (W1) jedes der Teilabschnitte (63c), die mit den Elektrodenverbindungsabschnitten (63b) in Kontakt stehen, kleiner ist als eine kleinste Breite (W4) der Teilabschnitte (63f), die mit dem Anschlussverbindungsabschnitt (63a) in Kontakt stehen.

12. Batterie nach einem der Ansprüche 1 bis 4, **dadurch gekennzeichnet, dass** zumindest vier sich in Längsrichtung erstreckende Sicherungselemente (65c), die die Elektrodenverbindungsabschnitte (65b) und das sich quer erstreckende Sicherungselement (65e) miteinander verbinden, bereitgestellt werden, wobei ein Abschnitt des sich quer erstreckenden Sicherungselements (65e), der mit einer kleinsten Breite (W3) ausgebildet ist, zwischen zwei mittleren der sich in Längsrichtung erstreckenden Sicherungselemente (65c) angeordnet ist.

13. Batterie nach Anspruch 12, **dadurch gekennzeichnet, dass** zusätzliche sich in Längsrichtung erstreckende Sicherungselemente (65f) bereitgestellt werden, die das sich quer erstreckende Sicherungselement (65e) und den Anschlussverbindungsabschnitt (65a) miteinander verbinden, wobei die Menge der sich in Längsrichtung erstreckenden Sicherungselemente (65c) größer als die Menge der zusätzlichen sich in Längsrichtung erstreckenden Sicherungselemente ist.

14. Batterie nach einem der Ansprüche 1 bis 13, **dadurch gekennzeichnet, dass** der zumindest eine Sicherungsabschnitt aus einem Material, das einen niedrigeren Schmelzpunkt als einen Schmelzpunkt des Anschlussverbindungsabschnitts und der Elektrodenverbindungsabschnitte aufweist, hergestellt ist.

## Revendications

1. Batterie rechargeable (101) comprenant une pluralité d'ensembles d'électrodes (10), comportant chacun des première et deuxième électrodes (11, 12), une borne (21) et un élément de collecte de courant (41) qui connecte les premières électrodes (11) à la borne (21), dans laquelle l'élément de collecte de courant (41) comporte une partie de connexion de borne (41a) qui est en contact avec la borne (21) et une pluralité de parties de connexion d'électrode (41b), chacune étant en contact avec l'une des premières électrodes (11), et dans laquelle l'élément de collecte de courant (41) comprend au moins une partie de fusibles connectant la partie de connexion de borne (41a) et les parties de connexion d'électrode (41b), dans laquelle chacune des parties de connexion d'électrode (41b) est respectivement connectée à la partie de fusibles, **caractérisée en ce que** la partie de fusibles comprend une pluralité d'éléments de fusible longitudinaux (41c) qui s'étendent parallèlement aux parties de connexion d'électrode (41b), dans laquelle chacun des éléments de fusible longitudinaux (41c) est en contact avec l'une des parties de connexion d'électrode (41b).

2. Batterie selon la revendication 1, **caractérisée en ce que** la partie de fusibles est basée latéralement sur la partie de connexion d'électrode (41b).

3. Batterie selon la revendication 1 ou 2, **caractérisée en ce qu'**au moins l'une des parties de connexion d'électrode (41b) comprend une section incurvée qui est directement en contact avec la partie de fusibles.

4. Batterie selon l'une quelconque des revendications 1 à 3, **caractérisée en ce que** la partie de fusibles comprend un élément de fusible transversal (62e) qui connecte au moins deux des parties de connexion d'électrode (62b) l'une à l'autre.

5. Batterie selon la revendication 4, **caractérisée en ce que** les éléments de fusible longitudinaux (62c) sont agencés entre l'élément de fusible transversal (62e) et la partie de connexion de borne (62a).

6. Batterie selon la revendication 4, **caractérisée en ce que** l'élément de fusible transversal (63e) connecte les éléments de fusible longitudinaux (63c) l'un à l'autre à une distance par rapport aux parties de connexion d'électrode (63b) et à la partie de connexion de borne (63a).

7. Batterie selon la revendication 6, **caractérisée en ce que** les éléments de fusible longitudinaux comprennent chacun deux sections secondaires (63f) qui s'étendent l'une vers l'autre parallèlement à la partie de connexion d'électrode (63b), dans laquelle l'élément de fusible transversal (63e) connecte les éléments de fusible longitudinaux l'un à l'autre au niveau des zones de contact des sections secondaires (63f) respectives.

8. Batterie selon l'une quelconque des revendications 4 à 7, **caractérisée en ce que** l'élément de fusible transversal (62e) est conçu pour être fondu par une quantité de courant plus faible que les éléments de fusible longitudinaux (62c).

9. Batterie selon la revendication 8, **caractérisée en ce qu'**une largeur minimum (W3) de l'élément de fusible transversal (63e) est inférieure à une largeur minimum (W1) des éléments de fusible longitudinaux (63c).

10. Batterie selon l'une quelconque des revendications 7 à 9, **caractérisée en ce que** les sections secondaires qui sont en contact avec les parties de connexion d'électrode (63b) sont conçues pour être fondues par une quantité de courant électrique plus faible que les sections secondaires (63f) qui sont en contact avec la partie de connexion de borne (63a).

11. Batterie selon l'une quelconque des revendications 7 à 10, **caractérisée en ce qu'**une largeur minimum (W1) de chacune des sections secondaires (63c) qui sont en contact avec les parties de connexion d'électrode (63b) est inférieure à une largeur minimum (W4) des sections secondaires (63f) qui sont en contact avec la partie de connexion de borne (63a).

12. Batterie selon l'une quelconque des revendications 1 à 4, **caractérisée en ce qu'**au moins quatre éléments de fusible longitudinaux (65c) qui connectent les parties de connexion d'électrode (65b) et l'élément de fusible transversal (65e) les uns aux autres sont prévus, dans laquelle une section de l'élément de fusible transversal (65e) qui est formée avec une largeur minimum (W3) est agencée entre les deux sections centrales des sections de fusible longitudinales (65c).

13. Batterie selon la revendication 12, **caractérisée en ce que** des éléments de fusible longitudinaux supplémentaires (65f) sont prévus qui connectent l'élément de fusible transversal (65e) et la partie de connexion de borne (65a) l'un à l'autre, dans laquelle la quantité des éléments de fusible longitudinaux (65c) est plus grande que la quantité des éléments de fusible longitudinaux supplémentaires.

14. Batterie selon l'une quelconque des revendications 1 à 13, **caractérisée en ce que** ladite au moins une partie de fusibles est réalisée en un matériau ayant un point de fusion inférieur à un point de fusion de la partie de connexion de borne et des parties de connexion d'électrode.
